# EUROPEAN PATENT APPLICATION

(11) **EP 1 001 332 A1**
(43) Date of publication of application: **17.05.2000**
(21) Application number: 98309190.1
(22) Date of filing: 10.11.1998
(51) Int. Cl.: G06F 1/30, G06F 1/16

(54) **Power-down back-up supply**

(71) Applicant: LUCENT TECHNOLOGIES INC., Murray Hill, New Jersey 07974-0636 (US)
(72) Inventor: Helmerhorst, Henk Petrus, 1541 DW Koog a/d Zaan (NL)
(74) Representative: Williams, David John

(57) **Abstract**

There is disclosed a system in which at least one terminal is connected to a host. Upon the power supply to the at least one terminal terminating, due to a power-outage or turn-off of the terminal, energy means is provided in the at least one terminal to generate enough power to transmit a message to the host notifying that the at least one terminal is going off-line. The energy means is provided in a physical space in the at least one terminal, the physical space accommodating either one, but not both, of a battery or a capacitor.

## Description

### Field Of The Invention

The present invention relates to the efficient provision of an energy store in a terminal for enabling the terminal to communicate a notification to a host after a power-down. The invention relates particularly but not exclusively to network systems in which a plurality of network terminals communicate with a network host.

### Background to the Invention

The invention particularly relates to network systems that consist of a host and a plurality of network terminals connected to the host via a distribution network. The host is normally close to or at a central office and is connected to various kinds of services. The network terminals are normally located "in the field", and provide interfaces for user access to various kinds of services provided by the host.

The network terminals are locally powered. In the event of a local power-outage, or in the event that a network terminal is switched off, the network terminal needs to notify the host that it is going off-line. To be able to send a notification message to the host that they are going off-line, the network terminals must store sufficient energy after a power outage or switch-off to provide the power to communicate the message to the host. The message to the host communicating that a terminal is going off-line after a power outage is known as a "dying gasp".

Network terminals are commonly equipped with a back-up battery. The back-up battery can provide the required energy to send the message to the host after a power outage or switch off. However, it is common for the provision of this battery to be optional. At the time of purchase/installation, the customer usually decides whether to install a back-up battery in a network terminal. A back-up battery may also be installed in a network terminal at a later date. When no back-up battery is present, the energy necessary to communicate the 'dying gasp' must be provided by a different source. One known way of providing an alternative energy source is to provide a capacitor in the network terminal. In order to provide the necessary energy to communicate the message to the host, the capacitor is required to be physically large.

The network terminals thus have to provide physical space for both a back-up battery and a large capacitor to ensure the necessary energy for transmitting the message, whether the back-up battery is present or not. The provision of the capacitor ensures the necessary energy means to transmit the 'dying gasp' is present, regardless of whether the customer chooses not to install a back-up battery. Where a back-up battery is an optional feature, it is essential to ensure that a capacitor is present, since it is essential to transmit the 'dying gasp' message.

Small size (and low cost) is a very important factor for network terminals, and the provision of a physical space for both a back-up battery and a physical space for a capacitor undesirably contributes to an increase in the overall physical size of the network terminal.

### Summary of the Invention

According to the present invention there is provided a terminal for connection to a host, the terminal including a connector for connection to energy means for providing energy for communicating a notification to the host when the power to the terminal is terminated, the terminal including physical space for accommodating either one of, but not both of, a battery or a capacitor, which comprises said energy means.

In another aspect of the invention, there is provided a system comprising a host and at least one terminal connected to the host, the at least one terminal including a connector for connection to energy means for providing energy for communicating a notification to the host when the power to the at least one terminal is terminated, the at least one terminal including physical space for accommodating either one of, but not both of, a battery or a capacitor, which comprises said energy means.

Thus there is provided a network terminal in which the same physical space is used for either one of, but only one of, the back-up battery or the capacitor in the network terminal at any one time.

The invention thus provides a solution to guarantee provision of energy means for communicating a "dying-gasp" from a network terminal, having the facility of an optional back-up battery, to a host without increasing the physical size of the network terminal beyond that required for a standard battery back-up solution.

Preferably there is provided a connector for connection to a connector of either a battery or a capacitor. The notification to the host is preferably a message that the terminal is going off-line. The host may be connected to the at least one terminal by a distribution network. The power may be terminated due to a power outage. The power may be terminated due to the terminal being switched off.

### Brief Description of the Figures

Figure 1 illustrates a system comprising a plurality of network terminals connected to a host;
Figure 2 illustrates the connection of a network terminal according to the present invention for connection to either a back-up battery or a capacitor;
Figure 3 illustrates the connection of Figure 2 with to a back-up battery; and
Figure 4 illustrates the connection of Figure 2 with to a capacitor.

### Description of Preferred Embodiment

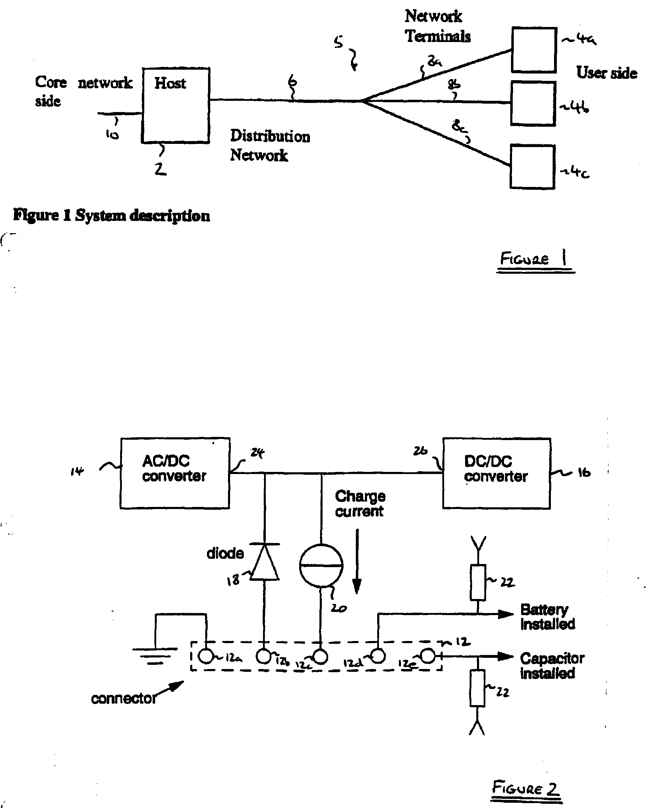

Figure 1 illustrates a network system including a network host 2 and three network terminals 4a, 4b, 4c. Although three network terminals are shown in Figure 1 for purposes of illustration, it will be appreciated that the network system may include any number of a plurality of network terminals, and may include only one network terminal.

A distribution network 5 connects the host 2 to the network terminals 4a, 4b, 4c. The distribution network 5 includes a core connection 6 and individual connections 8a, 8b, 8c to each of the network terminals 4a, 4b, 4c. The distribution network 5 may be made of optical fibre, coaxial cable, wireless etc. The host is also connected to a core network by a connection 10.

The host 2 may be connected to various kinds of services, for example telephony, data and Internet services. The network terminals 4a, 4b, 4c access the services to which the host is connected via the distribution network 5.

Each of the network terminals 4a, 4b, 4c may be at a different remote location, and each has its own local power supply. When any one of the local power supplies terminates, either by power outage or by the network terminal being switched off, the network terminal being supplied by that local power supply sends a message to the host notifying that it is going off-line.

According to the present invention, each of the network terminals 4a, 4b, 4c is provided with a single physical space in which either one of, but not both of, a back-up battery or a capacitor is provided. Since the capacitor is in fact only required when the battery is not provided, when no battery is installed the space provided for the battery is utilised to store the capacitor.

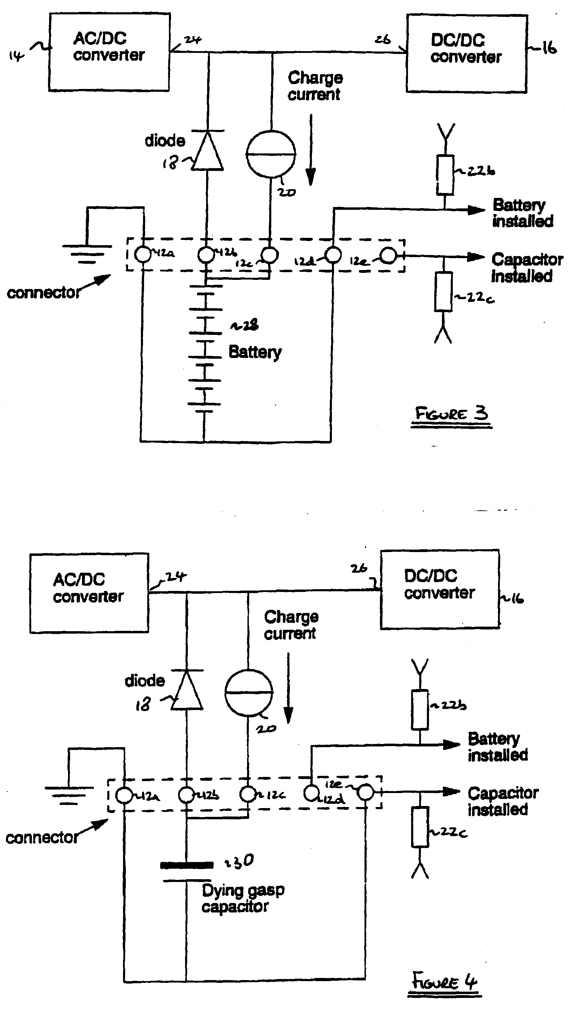

Referring to Figure 2 there is illustrated the connector of a network terminal, such as any one of the network terminals 4a, 4b, 4c, for connection to the back-up battery or capacitor in accordance with the present invention.

The connector is illustrated generally by reference numeral 12, and includes five connection terminals 12a, 12b, 12c, 12d, 12e. Inside the network terminal there is provided an ac/dc converter 14, a dc/dc converter 16, a diode 18, a current regulator 20, and two resistors 22b and 22c.

In normal operation, the ac/dc converter 14 receives an ac voltage supply from a mains connector (not shown), and rectifies this input to provide a dc voltage level at its output 24. The dc voltage level at the output 24 of the ac/dc converter 14 forms an input 26 to the dc/dc converter 16. The dc/dc converter 26 regulates the dc voltage level at the output 24 of the ac/dc converter to provide at its output (not shown) a suitable dc voltage level for use by the network terminal.

The connector 12 is provided according to the present invention to provide connection to one of the two energy means to provide the energy for the network terminal to transmit the "dying gasp" message.

The connector terminal 12a provides a connection to earth. The connector terminals 12b, 12c provide connections to the positive terminal of one of the respective energy means. The connector terminals 12d, 12e provide connection to the negative supply terminal of one of the respective energy means.

The diode 18 is connected between the input of the dc/dc converter 16 and the terminal 12b such that current can conduct only from the terminal 12b to the input 26 of the dc/dc converter 16. The current regulator 20 is connected between the input 26 to the dc/dc converter and the terminal 12c. The resistor 22u is connected between the terminal 12d and a positive supply. The resistor 22d is connected between the terminal 12e and a positive supply.

Referring to Figure 3, there is shown the connector 12 of Figure 2 with a back-up battery connected thereto. The back-up battery,generally designated by reference numeral 28, consists of a number of battery cells. The positive terminal of the back-up battery is connected to the terminals 12b, 12c. The negative terminal of the back-up battery 28 is connected to the terminals 12a, 12d. The terminal 12e is not connected.

The connection of terminal 12d to the negative terminal of the battery causes a current to flow through the resistor 22b to ground via terminal 12a. The current flow in the resistor 22b indicates to the network terminal presence of the back-up battery.

When the ac/dc converter provides power to the network terminal the current regulator 20 provides a charge current to the positive terminal of the battery via terminal 12c. If a non-rechargeable battery is used in place of the battery 28, the charging circuit can be simplified by replacing the current regulator 20 by a resistor.

When the power to the network terminal fails or is turned off (which is detected by circuitry of the network terminal not shown and outside the scope of the invention). Diode 18 turns on due to the voltage change at the output 24 of the ac/dc converter and the battery 28 provides a dc voltage to the input 26 of the dc/dc converter.

Referring to Figure 4, there is shown the connector 12 of Figure 2 with capacitor connected thereto. The capacitor is generally designated by reference numeral 30. The positive terminal of the capacitor is connected to the terminals 12b, 12c. The negative terminal of the capacitor 30 is connected to the terminals 12a, 12e. The terminal 12d is not connected.

The connection of terminal 12e to the negative terminal of the battery causes a current to flow through the resistor 22c to ground via terminal 12a. The current flow in the resistor 22c indicates to the network terminal presence of the capacitor.

When the ac/dc converter provides power to the network terminal the current source 20 provides a charge current to the positive terminal of the capacitor via terminal 12c

When the power to the network terminal fails or is turned off (which is detected by circuitry of the network terminal not shown and outside the scope of the invention) diode 18 turns on due to the voltage change at the output 24 of the ac/dc converter and the capacitor 30 provides a dc voltage to the input 26 of the dc/dc converter.

Thus, in accordance with the present invention the network terminal is provided with a single physical interface for connection either to a back-up battery or to a capacitor. This results in an overall simplification of the network terminal unit, with a consequential cost reduction. The reduction in the size of the overall unit also reduces the cost.

The provision of terminals 12d and 12e is optional. When these terminals are provided, the network terminal can be alerted to the absence of both a capacitor and a back-up battery, which may trigger an alarm.

The present invention is applicable to any system in which a remote terminal communicates with a host and in which a back-up battery is optional.

## Claims

1. A terminal for connection to a host, the terminal including a connector for connection to energy means for providing energy for communicating a notification to the host when the power to the terminal is terminated, the terminal including physical space for accommodating either one of, but not both of, a battery or a capacitor, which comprises said energy means.

2. The terminal of claim 1 in which there is provided a connector for connection to a connector of either a battery or a capacitor.

3. The terminal of claim 1or claim 2 in which the notification to the host is a message that the terminal is going off-line.

4. The terminal of any preceding claim in which the host is connected to the at least one terminal by a distribution network.

5. The terminal of any preceding claim, in which the power is terminated due to a power outage.

6. The terminal of any preceding claim, in which the power is terminated due to the terminal being switched off.

7. A system comprising a host and at least one terminal connected to the host, the at least one terminal including a connector for connection to energy means for providing energy for communicating a notification to the host when the power to the at least one terminal is terminated, the at least one terminal including physical space for accommodating either one of, but not both of, a battery or a capacitor, which comprises said energy means.
